**Europäisches Patentamt**

**European Patent Office**

**Office européen des brevets**

(19)

(11) Numéro de publication: **0 113 605**
**B1**

(12) # FASCICULE DE BREVET EUROPÉEN

(45) Date de publication du fascicule du brevet:
24.09.86

(51) Int. Cl.⁴: **H 04 N 5/32**

(21) Numéro de dépôt: **83402282.4**

(22) Date de dépôt: **25.11.83**

(54) Procédé et appareil pour former une image radiologique d'un corps.

(30) Priorité: **26.11.82 US 444614**

(43) Date de publication de la demande:
**18.07.84 Bulletin 84/29**

(45) Mention de la délivrance du brevet:
**24.09.86 Bulletin 86/39**

(84) Etats contractants désignés:
**DE FR GB NL**

(56) Documents cité:
**EP-A-0 082 771**
**DE-A-2 454 537**
**DE-A-3 007 620**
**GB-A-2 061 660**

(73) Titulaire: **THOMSON- CGR, 13, square Max-Hymans, F-75015 Paris (FR)**

(72) Inventeur: **Kruger, Robert A., THOMSON- CSF SCPI 173, bld Haussmann, F-75379 Paris Cedex 08 (FR)**
Inventeur: **Bateman, Wayne, THOMSON- CSF SCPI 173, bld Hausmann, F-75379 Paris Cedex 08 (FR)**

(74) Mandataire: **Grynwald, Albert, THOMSON- CSF SCPI 19, avenue de Messine, F-75008 Paris (FR)**

## Description

La présente invention se rapporte à un procédé et à un appareil pour obtenir des images radiographiques et plus particulièrement à un procédé et à un aparail pour obtenir des images radiographiques améliorées d'une anatomie opacifiée, contenant une information concernant un débit sanguin, en utilisant un type d'équipement radiologique en coopération avec un processeur vidéo.

Un appareil de radiologie aux rayons X classique comprend une source de rayons X et un élément d'intensification d'image qui est utilisé pour détecter le rayonnement X. La sortie de l'élément d'intensification d'image est observée par une caméra de télévision et le signal de télévision résultant peut être affiche sur un moniteur et/ou enregistré. Lorsqu'un corps, tel que celui d'un patient, est interposé entre la source de rayons X et le détecteur, des rayons X sont absorbés à des degrés variables en fonction de l'épaisseur et de la composition de différentes régions du corps. Cela se traduit par l'affichage d'une image bidimensionnelle qui peut être utilisée, par exemple, pour diagnostiquer des anomalies structurelles à l'intérier du corps.

La possibilité de "voir" une structure dans le corps en utilisant la technique décrite dépend des propriétés d'absorption de rayons X de la structure considérée en relation avec les propriétés d'absorption de rayons X de la ou des matières adjacentes à la structure. Plus la différence est grande, plus le "contraste" de la structure considérée est grand dans l'image de télévision résultante. Plus le contraste est grand, plus la clarté de la structure dans l'image est grande. En conséquence, l'établissement d'un grand contraste constitue une qualite souhaitable avec ce processus de formation d'image.

Des agents de contraste radiographique sont utilisés pour créer une grande différence de comportement d'absorption de rayons X dans des cas où il n'en existait auparavant peu ou aucun. Par exemple des vaisseaux sanguins sont virtuellement invisibles sur les images (excepté dans la poitrine) du fait que du sang, des muscles, de la graisse et des tissus mous possèdent tous des comportements semblables d'absorption de rayons X. Des agents de contraste radiographique contiennent une matière (par exemple de l'air, du baryum, de l'iode) qui a des propriétés d'absorption de rayons X différentes de celles du sang, des muscles, de la graisse et des tissus mous. Par exemple, lorsqu'une dose appelée "bolus" d'une matière de contraste constituée par un liquide iodé est injectée dans une artère ou une veine, la structure vasculaire est pourvue artificiellement d'un contraste plus fort sur une image radiographique lorsque la matière de contraste se trouve à l'intérieur dun certain segment vasculaire. L'agent de contraste, s'écoulant avec le sang, est rapidement évacué d'un segment et passe dans le suivant. Pour mettre en évidence de grands segments d'une structure vasculaire, on administre usuellement de gros "bolus" de longue durée (plusieurs secondes). Puisque des agents de contraste iodés sont toxiques et causent au patient une gêne faible mais sensible, ainsi que certains risques de sérieures complications, on a utilisé dans des processus courants seulement des quantités limitées.

Dans la demande de brevet européen N° 82 771, on décrit une technique qui réduit la quantité de matière de contraste nécessaire pour un processus donné et/ou qui améliore l'image pouvant être obtenue lors de l'utilisation d'une quantité donnée de matière de contraste. Ce résultat est obtenu par mémorisation, pour chaque point d'une image vidéo ou pixel, du niveau du signal vidéo représentant l'opacification maximale pendant une séquence de trames vidéo pendant lesquelles le "bolus" traverse un vaisseau sanguin considéré. Puisqu'une opacification maximale de chaque partie du vaisseau se produit lorsque la concentration de la matière de contraste est la plus grande, la technique revendiquée permet une visualisation du vaisseau comme si la matière de contraste était présente dans celui-ci à sa concentration maximale.

Il rentre parmi les objets de la présente invention de produire des images traitées améliorées de la structure interne d'un corps, et également de déterminer le temps de parcours du sang entre des points sélectionnés d'un vaisseau de façon à pouvoir déterminer un écoulement sanguin.

La présente invention concerne un procédé et un appareil pour produire une image vidéo traitée d'un vaisseau de canalisation de fluide dans un corps et elle peut aussi être utilisée pour obtenir une information concernant le débit de fluide, typiquement du sang, dans le vaisseau. Conformément au procédé de l'invention, l'agent de contraste est injecté dans le corps, typiquement dans le vaisseau dont on doit obtenir une image ou bien débouchant dans le vaisseau dont on doit obtenir une image. (Dans la présente description, le terme "vaisseau" est destiné à signifier l'un quelconque ou plusieurs conduits ou tubes d'écoulement de fluides; plus particulièrement, mais sans limitation, du système vasculaire). Une source de rayonnement, typiquement des rayons X, est dirigée sur le corps et un rayonnement qui passe au travers du corps est détecté et converti en une série de trames de signaux vidéo électroniques, de préférence sous une forme numérique. Les trames représentent des images des caractéristiques de transmission de rayonnement du corps à une série d'instants successifs. Chaque trame comprend un ensemble de pixels, le niveau vidéo de chaque pixel d'une trame étant déterminé par l'aptitude de transmission de rayonnement du corps au travers d'une zone élémentaire de celui-ci. On détermine le temps où le niveau du signal vidéo correspondant à chaque pixel indique une opacification maximale de la zone élémentaire du corps correspondant au pixel. Une valeur de représentation de temps est mémorisée, pour chaque pixel, et elle dépend du temps déterminé. On peut alors afficher une image vidéo traitée qui comporte un paramètre vidéo, tel que la luminance, qui dépend, pour chaque pixel, de la valeur de représentation de temps pour le pixel.

Dans le mode préféré de réalisation de l'invention, les étapes de détermination du temps pour lequel le niveau du signal vidéo de chaque pixel représente une opacification maximale, et de mémorisation d'une valeur representant un temps pour chaque pixel, comprennent les étapes suivantes: des valeurs de représentation de temps sont engendrées en fonction du temps pendant la séquence. Une trame vidéo est mémorisée dans une première mémoire de trames. Le signal vidéo obtenu pour chaque pixel d'une trame engendrée est comparé avec le niveau de signal vidéo pour le pixel correspondant de la trame vidéo mémorisée dans la première mémoire de trames. Pour chaque pixel, on sélectionne un signal vidéo représentant le plus bas des niveaux comparés du signal vidéo (c'est-à-dire le plus opaque). Une indication d'apparition est engendrée à chaque fois que le niveau du signal vidéo dans le pixel de la trame engendrée est inférieur au niveau de signal vidéo dans le pixel de la trame vidéo mémorisée dans la première mémoire de trames. Les niveaux sélectionnés de signal vidéo sont remémorisés dans la première mémoire de trames (qui emmagasine ainsi le signal vidéo représentant la condition la plus opaque pour chaque pixel pendant la séquence). La valeur courante de représentation de temps est mémorisée, en réponse à une indication d'évenement, dans le pixel correspondant dune seconde mémoire de trames qui est synchronisée avec la première mémoire de trames. Le processus est ensuite répété pour des trames engendrées successivement.

De la manière décrite, l'image vidéo traitée est représentée par des valeurs de représentation de temps dans la seconde mémoire de trames. Ces valeurs de représentation de temps indiquent pour chaque pixel le temps à opacification maximale. Lorsque ces valeurs sont affichées, par exemple sous forme de niveaux de luminance vidéo, les parties opacifiées le plus tôt apparaissent en noir tandis que les parties opacifiées le plus tard apparaissent en blanc, des niveaux de gris intermédiaires représentant le temps relatif d'opacification pour d'autres zones.

Conformément à une autre caractéristiques de l'invention, une information concernant un débit sanguin peut être déterminée. En particulier, après une sélection de positions espacées de pixels dans le vaisseau, on peut déterminer la distance correspondant au trajet de déplacement entre les pixels sélectionnés. Un temps de déplacement entre les pixels le long d'un trajet sélectionné peut être obtenu à partir des valeurs de représentation de temps qui ont été mémorisées en relation avec les pixels. Puisque le"front donde" du "bolus" (c'est-à-dire la concentration maximale de la matière de contraste) se déplace sensiblement à la vitesse du sang dans le vaisseau considéré, on peut déterminer la vitesse d'écoulement du sang. Si la géométrie du vaisseau est alors connue ou observée, on peut obtenir une mesure volumétrique de l'écoulement sanguin.

D'autres caractéristiques et avantages de l'invention seront mis en évidence dans la suite de la description, donnée à titre d'exemple non limitatif, en référence aux dessins annexés dans lesquels:

- la figure 1 est un schéma-bloc d'un mode de réalisation d'un appareil conforme à l'invention, qui peut être utilisé pour la mise en pratique du procédé de l'invention;

- la figure 2 est un schéma-bloc simplifié d'un système, utilisable en coopération avec le mode de réalisation de la figure 1, pour obtenir une information concernant un débit sanguin;

- la figure 3 est un organigramme d'un programme servant à la programmation du processeur de la figure 2 pour déterminer un débit sanguin en utilisant l'image mémorisée dans une des mémoires de trames de la figure 1.

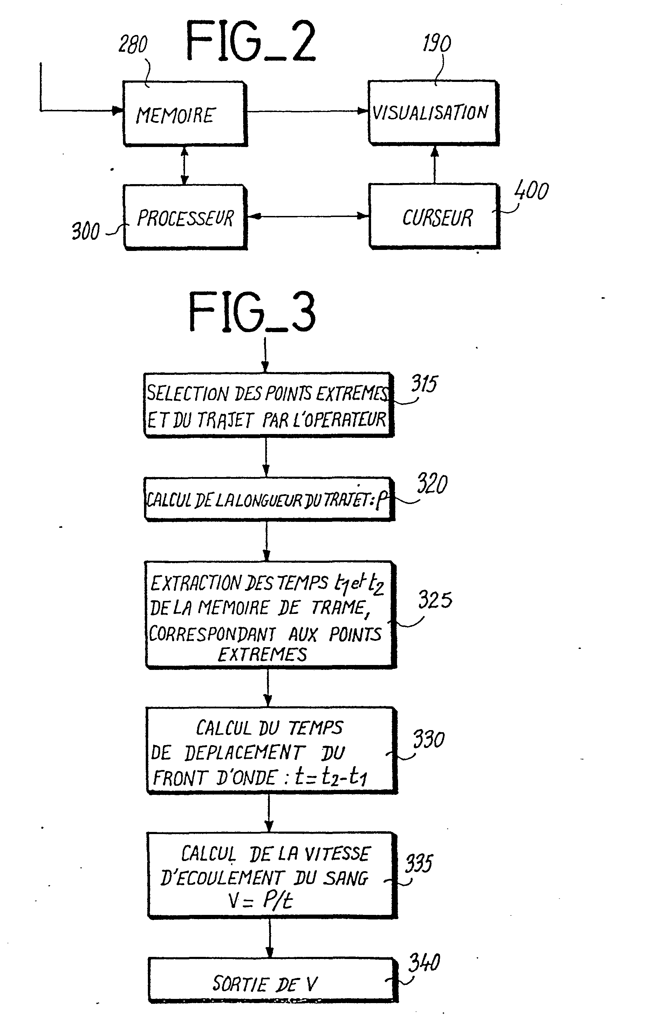

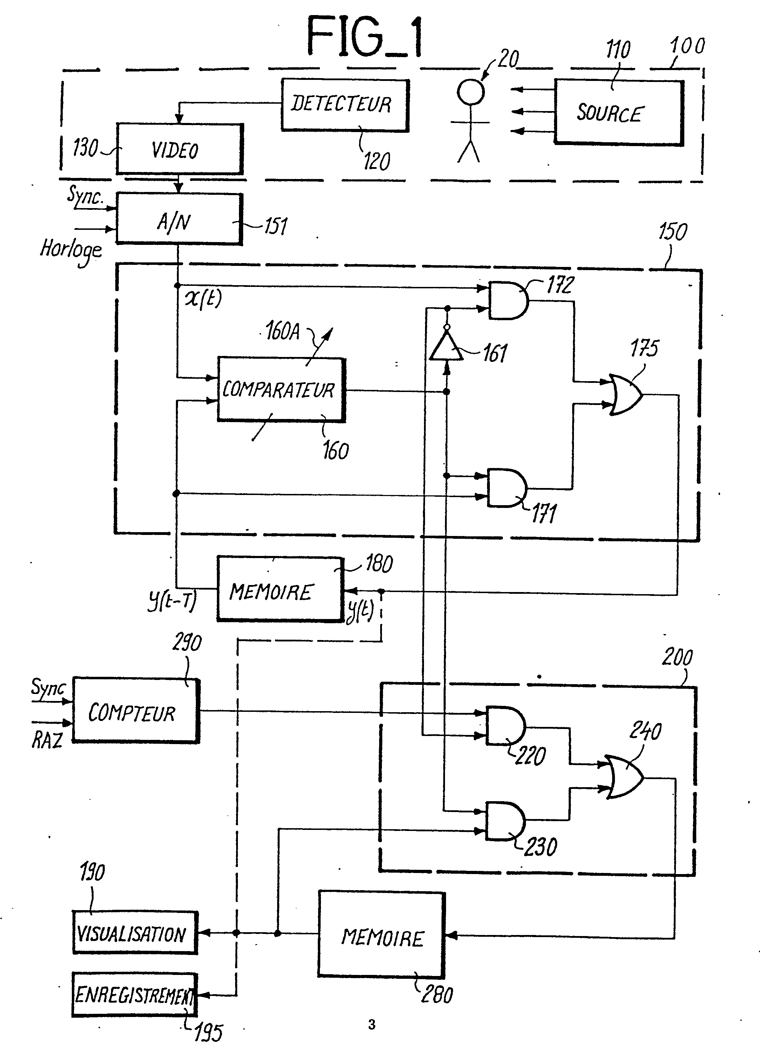

Sur la figure 1, on a représenté un schéma-bloc d'un appareil 100 pour obtenir une image affichée de la structure interne d'un corps 20. L'appareil 100 comprend classiquement une source de rayonnement 110, typiquement une source de rayons X, un détecteur 120 et un générateur vidéo 130. La combinaison du détecteur et du générateur vidéo peut comprendre par exemple un élément d'intensification d'image de rayons X en coopération avec une caméra de télévision. La sortie du générateur vidéo 130 est reliée à un convertisseur analogique-numérique 151 qui convertit le signal de télévision sous une forme numérique. Un équipement pour obtenir·le signal de télévision converti numériquement est bien connu dans l'art antérieur et commercialement disponible, un exemple en étant le modèle AD - 964310 fabriqué par THOMSON-CSF BROADCAST, Inc. Pour chaque pixel de l'image vidéo, le convertisseur numérique de signal de télévision engendre un signal numérique, par exemple un signal numérique de 8 bits représentant l'une de 256 gradations de niveau de luminance (pour un signal monochrome - comme considéré dans le mode de réalisation illustré). Le générateur vidéo et le convertisseur analogique-numérique reçoivent conventionnellement des signaux de synchronisation et le convertisseur analogiquenumérique reçoit également un signal d'horloge à la fréquence des pixels.

La sortie du convertisseur analogiquenumérique 151 est reliée à un circuit de sélection et discrimination 150 (représenté dans le rectangle délimité par un trait interrompu) qui comprend un comparateur numérique 160 et d'autres éléments, comme indiqué, et qui opère en combinaison avec une mémoire numérique de trames 180. Ces circuits peuvent fonctionner essentiellement comme décrit dans la demande de brevet européen No 82 771. Le comparateur 160 reçoit comme premier signal d'entrée le signal de sortie du convertisseur analogique-numérique 151 et comme autre signal d'entrée un autre signal vidéo numérique de huit bits qui provient de la mémoire numérique de trames 180. Le signal de sortie du convertisseur analogique-numérique 151 (c'est-à-dire le signal vidéo numérique "présent" pour un pixel particulier) est désigné par x(t), et le signal de sortie de la mémoire numérique de trames 180 (c'est-à-dire un signal vidéo numérique minimal précédemment mémorisé pour le pixel particulier de la trame) est désigné par y(t-T), où T désigne le temps entre trames. Le comparateur 160 agit dé façon à produire un signal de sortie "O" si le signal d'entrée x(t) est le plus bas de ses deux signaux d'entrée, et un signal de sortie "1" si le signal d'entrée y(t-T) est le plus bas de ses deux signaux d'entrée. Le signal de sortie du comparateur 160 est appliqué à une entrée d'une porte ET 171, et également à une entrée d'une autre porte ET 172 par l'intermédiaire d'un inverseur 161. L'autre signal d'entrée à la porte ET 171 est le signal de huit bits y(t-T) qui est appliqué à la porte ET 171. L'autre signal d'entrée appliqué à la porte ET 172 est le signal de huit bits x(t) qui est appliqué à la porte ET 172. (Des retards appropriés, non indiqués, peuvent être établis, comme cela est connu dans l'art antérieur, pour égaliser des temps intrinsèques de traitement de circuits individuels). Les portes ET 171 et ET 172 lorsqu'elles sont validées par leur signal d'entrée d'un seul bit provenant du comparateur 160 (inversé dans le cas de l'entrée à la porte ET 172), transmettent leurs signaux d'entrée de huit bits à une porte OU 175. Puisque seulement une des portes ET 171 ou 172 peut être validée à un moment donné, la porte OU 175 agit de façon à laisser passer le signal de huit bits provenant de la porte ET qui a été validée.

Le signal de sortie de la porte ET 175, désigné par y(t), est le signal vidéo numérique minimal global présent pour le pixel particulier de la trame en train d'être traitée. Ce signal est mémorisé pour ledit pixel particulier dans la mémoire numérique de trames vidéo 180. (Les mémoires de trames correspondantes peuvent comprendre par exemple un modèle de mémoire numérique de trames vidéo FS-963155 fabriqué par THOMSON-CSF BROADCAST, Inc. ou, en variante, elles peuvent être constituées par toute mémoire appropriée, par exemple une mémoire à accès aléatoire, comportant des adresses de pixels qui sont synchronisées avec les adresses de pixels du reste du système par dérivation desdites adresses à partir de signaux communs de synchronisation et d'horloge.

Il est prévu un compteur 290 qui agit de manière à compter des trames d'une séquence de traitement en répondant à des indications de zones impaires des signaux de synchronisation. Le compteur est remis à zéro avant le début de chaque séquence. Le signal de sortie du compteur de trames 290, qui représente le compte de trames présent, et qui est fonction du temps qui s'est écoulé pendant la série de trames, est appliqué à un circuit de sélection de signal 200, entouré par un rectangle en trait interrompu, qui opère en combinaison avec une mémoire numérique de trames 280. En particulier, le compte de trames présent est appliqué à une entrée d'une porte ET 220, dont l'autre entrée reçoit le signal de sortie de l'inverseur 161 à partir du circuit 150. La sortie de la porte ET 200 est reliée à une entrée d'une porte OU 240, dont la sortie est à son tour reliée à l'entrée de la mémoire numérique de trames 280. La mémoire de trames 280 opère en synchronisme avec la mémoire de trames 180, c'est-à-dire qu'elles utilisent les mêmes signaux de synchronisation et d'horloge et qu'elles adressent simultanément des pixels correspondants. Un signal de sortie de la mémoire numérique de trames 280 est appliqué à une entrée d'une porte ET 230. L'autre signal d'entrée appliqué à la porte 230 est le signal de sortie non inversé du comparateur 160, qui se trouve dans un état opposé à celui du signal provenant de l'inverseur 161. Le signal de sortie de la porte ET 230 constitue un second signal d'entrée appliqué à la porte OU 240.

Lors de l'utilisation du mode de réalisation décrit ci-dessus, un "bolus" d'une matière de contraste est injecté dans le vaisseau ou partie du système vasculaire à représenter. Le traitement est alors amorcé. Le circuit 150 et la mémoire de trames 180 opèrent généralement de la manière décrite dans la demande de brevet mentionnée ci-dessus EP 22 771. En particulier la mémoire de trames 180 est initialement chargée avec des valeurs correspondant à un niveau faisant en sorte que la première trame vidéo convertie numériquement soit chargée dans la mémoire 180. Ensuite, chaque trame convertie numériquement de façon séquentielle est comparée, pixel par pixel, avec le pixel correspondant dans la mémoire de trame 180. Ainsi, chaque pixel x(t) de la trame vidéo présente est comparé avec le pixel correspondant, y(t-T) provenant de la mémoire de trames 180. Le résultat de la comparaison (établi par le comparateur 160) est utilisé pour autoriser soit la porte OU 171 (quand y(t-T) est inférieur) soit la porte OU 172 (quand x(t) est inférieur) à laisser passer le niveau de luminance qui est inférieur vers la mémoire de trames 180 pour une remémorisation. Puisque la valeur minimale de luminance pour chaque pixel représente l'opacité maximale de la région du corps correspondant au pixel, l'image traitée dans la mémoire de trames 180 est une trame d'informations vidéo qui représente l'opacité maximale dans chaque région élémentaire du corps en train dêtre observé pendant le temps où le processeur est en service. Un signal de sortie traité facultatif (c'està-dire traité conformément aux principes de la demande de brevet eurpéen N° 82 771 peut être prélevé sous la forme de y(t) ou y(t-T), comme indiqué, et il est transmis à un dispositif d'affichage 190 et/ou un enregistreur 195.

Conformément au perfectionnement de l'invention, la mémoire de trames 280 mémorise une valeur représentant un temps (dans ce mode de réalisation, elle correspond à un compte de trames pendant la séquence) pour chaque pixel de la trame. La valeur représentant un temps représente le temps où, pendant la séquence, le niveau du signal vidéo correspondant à ce pixel particulier a atteint son niveau minimal; c'est-à-dire le temps où la région élémentaire du corps correspondant à la position de pixel était la plus opaque. Dans le mode de réalisation de la figure 1, une indication que le niveau de signal vidéo pour ce pixel particulier atteint une nouvelle valeur minimale globale ou absolue est définie par la présence d'un "I" à la sortie de l'inverseur 161 du circuit 150. En correspondance, le signal de sortie de l'inverseur 161 est utilisé dans le circuit 200 pour valider la porte ET 220 lorsqu'un nouveau niveau vidéo minimal global est détecté tandis que le signal de sortie non inversé du comparateur 160 est utilisé pour valider la porte ET 230 dans tout autre cas. Lorsque la porte ET 220 est validée, le compte de trames présent provenant du compteur 290 est mémorisé dans la mémoire de trames 280 pour ce pixel particulier tandis que, lorsque la porte ET 230 est validée, le compte de trames déjà mémorisé dans la mémoire est remémorisé pour ce pixel particulier.

De la manière décrite, l'image vidéo traitée est représentée par les valeurs représentant un temps dans la seconde mémoire de trames. Ces valeurs représentant un temps indiquent le temps nécessaire pour que chaque pixel atteigne une opacification maximale. Dans le mode de réalisation considéré, lorsque ces valeurs sont affichées comme des niveaux de luminance vidéo (par exemple sur le dispositif d'affichage 190 ou bien par l'intermédiaire d'un enregistreur vidéo 195), les parties opacifiées le plus tôt apparaîtront en noir, les parties opacifiées le plus tard apparaîtront en blanc, avec des niveaux de gris intermédiaires qui représentent le temps relatif d'opacification d'autres régions.

Si on le désire, la mémoire de trames 280 peut être initialement chargée avec des valeurs représentant un temps pour n'importe quel niveau désiré de gris. Pour une anatomie stationnaire, le degré d'opacification ne varie pas sensiblement pendant la séquence. Si le comparateur 160 (figure 1) est réglé avec une différence de seuil qui doit être dépassée avant qu'un signal "O" soit produit à la sortie (c'est-à-dire que l'opacité doit augmenter d'au moins une valeur prédéterminée), des indications d'apparition (à la sortie de l'inverseur 161) seront produites seulement lorsque le niveau du signal vidéo présent dans un pixel est inférieur au niveau de signal minimal mémorisé précédemment d'une quantité qui dépasse le seuil sélectionné. Le seuil peut être variable, comme indiqué par la flèche 160 A. En cours de fonctionnement, dans les parties de l'image au travers desquelles passe la matière de contraste, cela se traduit par une augmentation sensible d'opacité à des instants différents pendant la séquence. En conséquence, le seuil du comparateur 160 est dépassé et le fonctionnement se déroule comme décrit ci-dessus. Cependant pour les parties de l'image où l'augmentation d'opacité n'est jamais suffisante pour dépasser le seuil du comparateur 160, le niveau de luminance mémorisé à l'origine (c'est-à-dire le niveau de gris présélectionné) restera dans la mémoire de trames 280. Il est à noter que le niveau présélectionné de référence de fond peut être choisi à toute valeur désirée; par exemple on peut obtenir un contraste maximal avec la partie antérieure du front d'onde du "bolus" en utilisant un niveau de référence de fond qui soit blanc, ou bien on peut obtenir un contraste maximal avec la partie ultérieure du front d'onde du "bolus" en utilisant un niveau de référence de fond qui soit noir. Il est également à noter qu'un mouvement de parties de l'image, avec ou sans présence d'une matière de contraste, peut faire en sorte que ces parties de l'image indiquent l'instant ou l'opacité maximale s'est produite (si le niveau de seuil est dépassé).

Conformément à une autre caractéristique de l'invention, une information concernant un débit sanguin peut être déterminée. L'image vidéo traitée se trouvant dans la mémoire numérique de trames 280 contient finalement, pour les pixels placés à l'intérieur d'un vaisseau sanguin à examiner, le temps s'écoulant jusqu'à une opacification maximale, c'est-à-dire des valeurs de représentation de temps qui indiquent l'instant où le "front d'onde" du "bolus" (défini comme la concentration maximale de matière de contraste qui se traduit par une opacité maximale) a passé en chaque point. En conséquence, pour deux points séparés dans un vaisseau sanguin, les valeurs mémorisées de représentation de temps pour la trame traitée en dernier peuvent être utilisées pour déterminer le temps qu'a mis le front d'onde du "bolus" pour passer d'un de ces points à l'autre. Par exemple, si les deux positions de pixel 1 et 2 ont des coordonnées désignées par $(x_1, y_1)$ et $(x_2, y_2)$, et si leurs valeurs mémorisées de représentation de temps sont désignées respectivement par $t_1$ et $t_2$, le temps mis par le front d'onde du "bolus" pour passer du point 1 au point 2 serait de $t_2 - t_1$. Puisque le "front d'onde" se déplace sensiblement à la vitesse du sang dans le vaisseau considéré, on peut déterminer le débit d'écoulement de sang. Si la géométrie du vaisseau est alors connue ou observée, on peut obtenir une mesure volumétrique de l'écoulement sanguin.

Sur la figure 2, un processeur 300 opère en coordination avec la mémoire numérique 280 (qui contient pour chaque pixel le temps s'écoulant jusqu'à une opacification maximale), le dispositif d'affichage 190 et un générateur de curseur conventionnel 400 pour obtenir une vitesse d'écoulement du sang. Le processeur 300 peut être par exemple un microprocesseur programmé conformément au programme de la figure 3. Le curseur peut être utilisé pour une sélection par un opérateur de positions spécifiques ou de trajets spécifiques sur un écran d'affichage vidéo. Un convertisseur numérique graphique (non représenté) peut être utilisé par exemple pour faire déplacer le curseur sur tout trajet désiré sur l'écran d'affichage. Dans l'art antérieur, on connaît des programmes (qui ne rentrent pas dans le cadre de l'invention) permettant de calculer la longueur d'une voie parcourue. En variante, on connaît dans l'art antérieur des plumes lumineuses qui peuvent être utilisées, d'une manière semblable, pour tracer une voie directement sur le dispositif d'affichage vidéo, la longueur de la voie étant automatiquement calculée.

Sur la figure 3, on a représenté un organigramme d'un programme approprié pour la programmation du processeur 300 de la figure 2 en vue d'obtenir un débit d'écoulement du sang le long d'une voie sélectionnée par un opérateur. Des points extrêmes et un trajet sélectionnés par un opérateur, sont introduits (bloc 315), par exemple en utilisant la table de données pour tracer une voie sélectionnée sur le dispositif d'affichage 190 lorsqu'il affiche l'image mémorisée en dernier dans la mémoire de trames 280. La longueur du trajet, p, est ensuite calculée (bloc 320) et les temps jusqu'à opacification maximale des pixels de points extrêmes, désignés par $t_1$ et $t_2$ sont extraits de la mémoire de trames 280 (bloc 325). Le temps de déplacement du front d'onde du "bolus" est déterminé par $t = t_2 - t_1$ (bloc 330). La vitesse d'écoulement du sang peut alors être déterminée comme le rapport de la longueur de trajet au temps, comme représenté par le bloc 335. La vitesse de sortie peut alors être fournie à l'opérateur (bloc 340) par l'intermédiaire d'un visualiseur ou d'un autre périphérique approprié.

Bien entendu, l'invention n'est pas limitée aux exemples de réalisation ci-dessus décrits et représentés, à partir desquels on pourra prévoir d'autres modes et d'autres formes de réalisation, sans pour cela sortir du cadre de l'invention. Par exemple, les valeurs représentant un temps pourraient être affichées en couleurs, ou bien les niveaux de luminance pourraient diminuer, au lieu d'augmenter, lors de la croissance des valeurs de représentation de temps. Il est évident que le traitement décrit ci-dessus peut être effectué pour une partie de la zone d'une trame video complète, auquel cas les trames définies ci-dessus constitueraient la zone effectivement traitée. Il est évident que le traitement pourrait être réalisé sur une série de trames prises à des instants successifs et pour différents angles de rotation d'un système de tomographie, comme décrit dans la demande de brevet européen N° 110 787, intitulée "Appareil et procédé pour former une image en coupe d'un corps", déposée à la même date que celle de la présente demande de brevet.

## Revendications

1. Procédé de génération d'une image vidéo traitée d'un vaisseau conduisant un fluide dans un corps, comprenant les étapes consistant à:
   - injecter un agent de contraste de manière qu'il passe dans le vaisseau;
   - assurer l'irradiation du corps;
   - détecter un rayonnement qui passe au travers du corps et engendrer une série de trames de signaux électroniques vidéo qui représentent une image des caractéristiques de transmission de rayonnement du corps à une série d'instants successifs, chaque trame comprenant un groupe de pixels, le niveau du signal vidéo pour chaque pixel étant déterminé par la transmission de rayonnement d'une région élémentaire du corps; caractérisé en ce qu'il consiste à:
   - déterminer l'instant où le niveau de signal vidéo pour chaque pixel représente l'opacification maximale de la région élémentaire du corps correspondant au pixel;
   - mémoriser, pour chaque pixel, une valeur représentative de temps, qui dépend de l'instant determine; et
   - afficher une image vidéo traitée qui a un paramètre vidéo dépendant, pour chaque pixel, de la valeur de représentation de temps pour le pixel.

2. Procédé selon la revendication 1, caractérisé en ce que ledit paramètre vidéo est un niveau de luminance vidéo.

3. Procédé selon la revendication 1 ou 2, caractérisé en ce que lesdites etapes de determination de l'instant ou le niveau de signal vidéo dans chaque pixel représente une opacification maximale et de mémorisation d'une valeur représentative de temps pour chaque pixel, comprennent les étapes consistant à:
   - engendrer les valeurs représentatives de temps en fonction du temps pendant la séquence;
   - mémoriser une trame vidéo dans une première mémoire de trames;
   - comparer le niveau de signal vidéo pour chaque pixel d'une trame engendrée avec le niveau de signal vidéo pour le pixel correspondant de la trame vidéo mémorisée dans la première mémoire de trames;
   - sélectionner pour chacun desdits pixels un niveau de signal vidéo représentant le plus bas des niveaux comparés du signal vidéo;
   - engendrer une indication d'événement à chaque fois que le niveau de signal vidéo du pixel de la trame engendrée est inférieur au niveau de signal vidéo du pixel de la trame vidéo mémorisée dans la première mémoire de trames;
   - remémoriser les niveaux sélectionnés du signal vidéo dans la première mémoire de trames;
   - mémoriser la présente valeur représentative de temps, en réponse à une indication d'événement, pour le pixel correspondant d'une seconde mémoire de trames synchronisée avec la première mémoire de trames; et

- répéter les étapes de comparaison et les étapes suivantes pour des trames suivantes engendrées;

- de façon que l'image vidéo traitée soit représentée par les valeurs représentatives de temps dans la seconde mémoire de trames.

4. Procédé selon la revendication 3, caractérisé en ce que les valeurs initiales de référence dans ladite seconde mémoire de trames représentent un niveau vidéo sélectionné et en ce que ladite indication d'événement est engendrée seulement lorsque le niveau de signal vidéo du pixel de la trame engendrée est inférieur, d'au moins une quantité prédéterminée, au signal vidéo pour le pixel correspondant de la trame vidéo mémorisée dans la première mémoire de trames.

5. Procédé selon la revendication 1 ou 2, caractérisé en ce qu'il comprend en outre les étapes consistant à déterminer une distance de trajet de déplacement entre des pixels sélectionnés dans ledit vaisseau sur l'image vidéo traitée; et à déterminer un temps de déplacement entre lesdits pixels le long dudit trajet à partir des valeurs représentatives de temps qui sont mémorisées en relation avec ceux-ci.

6. Procédé selon la revendication 5, caractérisé en ce qu'il comprend en outre l'étape consistant à déduire un débit dans ledit vaisseau à partir de ladite distance de trajet et dudit temps de déplacement.

7. Appareil pour engendrer un signal vidéo traité représentant une image d'un corps, comprenant:

- une source de rayonnement pouvant être dirigé sur le corps;

- un moyen pour détecter un rayonnement qui passe au travers du corps et pour engendrer une série de trames de signaux électroniques vidéo qui représentent une image des caractéristiques de transmission de rayonnement du corps à une série d'instants successifs, chaque trame comprenant un groupe de pixels, le niveau du signal vidéo pour chaque pixel étant déterminé par la transmissivité de rayonnement d'une région élémentaire du corps, caractérisé en ce qu'il comprend

- un moyen pour déterminer l'instant où le niveau de signal vidéo pour chaque pixel représente une opacification maximale de la région élémentaire du corps correspondant au pixel;

- un moyen pour mémoriser, pour chaque pixel, une valeur représentative de temps qui dépend de l'instant déterminé; et

- un moyen pour afficher une image vidéo traitée qui a un paramètre vidéo dépendant, pour chaque pixel, de la valeur représentative de temps pour le pixel.

8. Appareil selon la revendication 7, caractérisé en ce que ledit paramètre vidéo est un niveau de luminance vidéo.

9. Appareil selon la revendication 7, caractérisé en ce que ledit moyen de détermination de l'instant où le niveau de signal vidéo pour chaque pixel représente une opacification maximale, et le moyen de mémorisation d'une valeur représentative de temps pour chaque pixel, comprennent:

- un moyen pour établir des valeurs représentatives de temps en fonction du temps pendant la séquence;

- une première mémoire de trames;

- une seconde mémoire de trames synchronisée avec la première mémoire de trames;

- un moyen pour comparer le niveau de signal vidéo pour chaque pixel d'une trame engendrée avec le niveau de signal vidéo pour le pixel correspondant dune trame vidéo mémorisée dans la première mémoire de trames, et pour sélectionner, pour chacun desdits pixels, un niveau de signal vidéo représentant le plus bas des niveaux comparés du signal vidéo;

- un moyen pour engendrer une indication d'événement à chaque fois que le niveau de signal vidéo du pixel de la trame engendrée est inférieur au niveau de signal vidéo du pixel de la trame vidéo memorisée dans la première mémoire de trames;

- un moyen pour remémoriser les niveaux sélectionnés du signal vidéo dans la première mémoire de trames; et

- un moyen réagissant à des indications d'événements pour mémoriser la valeur présente représentative de temps pour le pixel correspondant de la seconde mémoire de trames;

- de manière que l'image vidéo traitée soit représentée par les valeurs de représentation de temps dans la seconde mémoire de trames.

**Patentansprüche**

1. Verfahren zum Erzeugen eines aufbereiteten Videobilds eines Gefäßes, das eine Flüssigkeit in einem Körper führt, dessen Schritte bestehen aus:

- ein Kontrastmittel einspritzen, so daß es in das Gefäß fließt;

für die Bestrahlung des Körpers sorgen;

- eine Strahlung ermitteln, die durch den Körper tritt, und eine Reihe von Teilbildern aus elektronischen Bildsignalen erzeugen, die ein Bild der Durchlaßkennwerte der Körperdurchstrahlung in einer Reihe von aufeinanderfolgenden Zeitpunkten vermitteln, wobei jedes Teilbild eine Gruppe von Bildpunkten umfaßt und der Bildsignalpegel für jeden Bildpunkt durch den Strahlungsdurchlaß eines Grundbereichs des Körpers bestimmt ist; dadurch gekennzeichnet, daß es besteht aus:

- einem Ermitteln des Zeitpunkts, zu dem der Bildsignalpegel für jeden Bildpunkt die maximale Trübung des jedem Bildpunkt entsprechenden Grundbereichs des Körpers wiedergibt;

- einem Einspeichern eines zeitrepräsentativen Wertes für jeden Bildpunkt, der vom zu ermittelnden Zeitpunkt abhängt; und

- einem Anzeigen eines bearbeiteten Videobilds, das eine Bildkenngröße hat, die für jeden Bildpunkt von dem Zeitrepräsentationswert des Bildpunkts abhängt.

2. Verfahren nach Anspruch 1, dadurch gekennzeichnet, daß die Bildkenngröße ein Bildleuchtdichtepegel ist.

3. Verfahren nach Anspruch 1 oder 2, dadurch gekennzeichnet, daß die Schritte zur Bestimmung des Zeitpunkts, zu dem der Bildsignalpegel in jedem Bildpunkt eine maximale Trübung wiedergibt, und des Einspeicherns eines zeitrepräsentativen Wertes für jeden Bildpunkt folgende Schritte umfaßt:

- Erzeugen der zeitrepräsentativen Werte abhängig von der Zeit während der Folge;

- Einspeichern eines Teilbilds in einen ersten Teilbildspeicher;

- Vergleichen des Bildsignalpegels für jeden Bildpunkt eines mit dem Bildsignalpegel für den Bildpunkt erzeugten Teilbilds entsprechend dem in den ersten Teilbildspeicher eingespeicherten Teilbild;

- Auswählen eines Bildsignalpegels für jeden Bildpunkt, der den tiefsten Vergleichsbildsignalpegel darstellt;

- Erzeugen eines Anzeigeereignisses jedesmal, wenn der Bildsignalpegel des Bildpunkts des erzeugten Teilbilds unter dem Bildsignalpegel des Bildpunkts des im ersten Teilbildspeicher gespeicherten Teilbilds liegt;

- erneutes Einspeichern des ausgewählten Bildsignalpegels in den ersten Teilbildspeicher;

- Einspeichern des aktuellen zeitrepräsentativen Wertes als Reaktion auf eine Ereignisanzeige für den entsprechenden Bildpunkt in einen zweiten, mit dem ersten Teilbildspeicher synchronisierten, Teilbildspeicher; und

- Wiederholen der Vergleichsschritte und der folgenden Schritte für die erzeugten nachfolgenden Teilbilder;

- so daß das aufbereitete Videobild durch die charakteristischen Zeitwerte im zweiten Teilbildspeicher wiedergegeben wird.

4. Verfahren nach Anspruch 3, dadurch gekennzeichnet, daß die Anfangsbezugswerte des zweiten Teilbildspeichers einen ausgewählten Bildpegel wiedergeben und daß die Ereignisanzeige lediglich dann erzeugt wird, wenn der Bildsignalpegel des Bildpunkts des erzeugten Teilbilds mindestens um einen vorgegebenen Betrag unter dem Bildsignal für den entsprechenden Bildpunkt des Teilbilds, das im ersten Teilbildspeicher eingespeichert ist, liegt.

5. Verfahren nach Anspruch 1 oder 2, dadurch gekennzeichnet, daß es außerdem die Schritte eines Bestimmens einer Wegstrecke der Versetzung zwischen den ausgewählten Bildpunkten in dem Gefäß auf dem aufbereiteten Videobild und eines Bestimmens einer Versetzungszeit zwischen den Bildpunkten längs des Wegs von den charakteristischen Zeitwerten an, die in Verbindung mit ihnen eingespeichert sind, umfaßt.

6. Verfahren nach Anspruch 5, dadurch gekennzeichnet, daß es weiter den Schritt eines Herleitens einer Durchflußleistung in diesem Gefäß aus dieser Wegstrecke und aus dieser Zeitversetzung umfaßt.

7. Vorrichtung zum Erzeugen eines aufbereiteten Bildsignals, das ein Bild eines Körpers charakterisiert, die umfaßt:

- eine Strahlungsquelle, die auf den Körper gerichtet werden kann;

- ein Mittel zum Feststellen einer Strahlung, die durch den Körper dringt, und zum Erzeugen einer Reihe von Teilbildern aus elektronischen Bildsignalen, die ein Bild der Durchlaßkennwerte der Körperdurchstrahlung in einer Reihe von aufeinanderfolgenden Zeitpunkten darstellen, wobei jedes Teilbild eine Gruppe von Bildpunkten umfaßt und der Bildsignalpegel für jeden Bildpunkt durch die Strahlungsdurchlaßfähigkeit eines Grundbereichs des Körpers bestimmt ist,

dadurch gekennzeichnet, daß sie umfaßt

- ein Mittel zum Bestimmen des Zeitpunkts, zu dem der Bildsignalpegel für jeden Bildpunkt eine maximale Trübung des Grundbereichs des Körpers entsprechend einem Bildpunkt wiedergibt;

- ein Mittel zum Einspeichern eines zeitrepräsentativen Werts für jeden Bildpunkt, der vom bestimmten Zeitpunkt abhängt; und

- ein Mittel zum Darstellen eines aufbereiteten Videobilds, das einen Bildparameter hat, der für jeden Bildpunkt vom zeitrepräsentativen Wert für den Bildpunkt abhängt.

8. Vorrichtung nach Anspruch 7, dadurch gekennzeichnet, daß der Bildparameter ein Bildleuchtdichtepegel ist.

9. Vorrichtung nach Anspruch 7, dadurch gekennzeichnet, daß das Bestimmungsmittel für den Zeitpunkt, zu dem der Bildsignalpegel für jeden Bildpunkt eine maximale Trübung wiedergibt, und das Einspeicherungsmittel für einen zeitrepräsentativen Wert für jeden Bildpunkt umfassen:

- ein Mittel zum Aufzeichnen der zeitrepräsentativen Werte abhängig von der Zeit während der Folge;

- einen ersten Teilbildspeicher;

- einen zweiten, mit dem ersten Teilbildspeicher synchronisierten, Teilbildspeicher;

- ein Mittel zum Vergleichen des Bildsignalpegels für jeden Bildpunkt eines erzeugten Teilbilds mit dem Bildsignalpegel für den Bildpunkt, der einem im ersten Teilbildspeicher gespeicherten Teilbild entspricht, und zum Auswählen eines Bildsignalpegels für jeden der Bildpunkte, der dem niedrigsten Vergleichsbildsignalpegel entspricht;

- ein Mittel zum Erzeugen einer Ereignisanzeige jedesmal, wenn der Bildsignalpegel des Bildpunkts des erzeugten Teilbilds unter dem Bildsignalpegel des Bildpunkts des im ersten Teilbildspeicher eingespeicherten Videoteilbilds liegt;

- ein Mittel zum erneuten Einspeichern des ausgewählten Bildsignalpegels in den ersten Teilbildspeicher; und

ein Mittel, das auf die Ereignisanzeigen zum Einspeichern des aktuellen zeitrepräsentativen Werts für den Bildpunkt anspricht, der dem zweiten Teilbildspeicher entspricht;

- damit das aufbereitete Videobild durch die zeitrepräsentativen Werte im zweiten Teilbildspeicher wiedergegeben wird.


**Claims**

1. Method of generating a processed video image of a vessel conducting a fluid in a body, comprising the stages consisting of:

- injecting a contrast agent so that it passes into the vessel;

- ensuring the irradiation of the body;

- detecting a radiation which passes through the body and generating a series of fields of electronic video signals which represent an image of the transmission characteristics of the body radiation at a series of successive instants, each field comprising a group of pixels, the video signal level for each pixel being determined by the radiation transmission of an elementary region of the body, characterized in that it consists in:

- determining the instant where the video signal level for each pixel represents the maximum opacification of the elementary region of the body corresponding to the pixel;

- storing for each pixel a time representative value which depends on the instant determined; and

- displaying a processed video image which has a video parameter depending for each pixel on the time representation value for the pixel.

2. Method according to claim 1, characterized in that said video parameter is a video luminance level.

3. Method according to claim 1 or 2, characterized in that the steps for determining the instant where the video signal level in each pixel represents a maximum opacification and for storing a time representative value for each pixel comprise the stages consisting in: - generating time representative values as a function of the time during the sequence;

- storing a video field in a first field memory;

- comparing the video signal level for each pixel of a generated field with the video signal level for the corresponding pixel of the stored video field in the first field memory;

- selecting for each of said pixels a video signal level representing the lowest of the levels of the video signal compared;

- generating an event display each time the video signal level of the pixel of the generated field is less than the video signal level of the pixel of the stored video field in the first field memory;

- restoring the selected levels of the video signal in the first field memory;

- storing the present time representative value in response to an event display for the corresponding pixel of a second field memory synchronized with the first field memory; and

- repeating the comparison stages and the following stages for following generated fields;

- in such a manner that the processed video image is represented by the time representative values in the second field memory.

4. Method according to claim 3, characterized in that the initial reference values in said second field memory represent a selected video level and that said event display is generated only when the video signal level of the pixel of the generated field is less by at least a predetermined quantity than the video signal for the corresponding pixel of the video field stored in the first field memory.

5. Method according to claim 1 or 2, characterized in that it also comprises the stages consisting in determining a displacement path distance between selected pixels in said vessel on the processed video image; and determining a displacement time between said pixels along said path starting from time representative values which are stored in relation to the latter.

6. Method according to claim 5, characterized in that it also comprises the stage consisting in deducing an amount in said vessel from said path distance and said displacement time.

7. Apparatus for generating a processed video signal representing an image of a body comprising:

- a radiation source adapted to be directed onto the body;

- a means for detecting a radiation which passes through the body and for generating a series of fields of electronic video signals which represent an image of the radiation transmission characteristics of the body at a series of successive instants, each field comprising a group of pixels, the level of the video signal for each pixel being determined by the radiation transmissivity of an elementary region of the body, characterized in that it comprises

- a means for determining the instant where the level of the video signal for each pixel represents a maximum opacification of the elementary region of the body corresponding to the pixel;

- a means for storing for each pixel a time representative value which depends on the instant determined; and

- a means for displaying a processed video image which has a video parameter depending for each pixel on the time representative value for the pixel.

8. Apparatus according to claim 7, characterized in that said video parameter is a video luminance level.

9. Apparatus according to claim 7, characterized in that said means for determining the instant where the level of the video signal for each pixel represents a maximum opacification and the means for storing a time representative value for each pixel comprise:

- a means for establishing the time representative values as a function of the time during the sequence; - a first field memory;

- a second field memory synchronized with the first field memory;

- a means for comparing the level of the video signal for each pixel of a generated field with the video signal level for the corresponding pixel of a video field stored in the first field memory and for selecting for each of said pixels a video signal level representing the lowest of the levels of the video signal compared;

- a means for generating an event display each time the video signal level of the pixel of the generated field is less than the video signal level of the pixel of the video field stored in the first field memory;

- a means for restoring the selected levels of the video signal in the first field memory; and

- a means reacting to the event displays for storing the present time representative value for the corresponding pixel of the second field memory;

- in such a manner that the processed video image is represented by the time representation values in the second field memory.

# FIG_2

*280*

```
┌──────────┐          ┌─────────────┐
│ MEMOIRE  │ ───────▶ │VISUALISATION│
└──────────┘          └─────────────┘
```
*190*

```
┌──────────┐          ┌─────────────┐
│PROCESSEUR│ ◀──────▶ │   CURSEUR   │
└──────────┘          └─────────────┘
```
*300*  *400*

# FIG_3

```
┌──────────────────────────────┐
│ SELECTION DES POINTS EXTREMES │  315
│ ET DU TRAJET PAR L'OPERATEUR  │
└──────────────────────────────┘
              │
              ▼
┌──────────────────────────────┐
│ CALCUL DE LA LONGUEUR DU      │  320
│ TRAJET : P                    │
└──────────────────────────────┘
              │
              ▼
┌──────────────────────────────┐
│ EXTRACTION DES TEMPS t1 et t2 │
│ DE LA MEMOIRE DE TRAME,       │  325
│ CORRESPONDANT AUX POINTS      │
│ EXTREMES                      │
└──────────────────────────────┘
              │
              ▼
┌──────────────────────────────┐
│ CALCUL DU TEMPS               │
│ DE DEPLACEMENT DU             │  330
│ FRONT D'ONDE : t = t2 - t1    │
└──────────────────────────────┘
              │
              ▼
┌──────────────────────────────┐
│ CALCUL DE LA VITESSE          │
│ D'ECOULEMENT DU SANG          │  335
│ V = P/t                       │
└──────────────────────────────┘
              │
              ▼
┌──────────────────────────────┐
│ SORTIE DE V                   │  340
└──────────────────────────────┘
```

$t = t_2 - t_1$

$V = P/t$

1

# FIG_1